Europäisches Patentamt

European Patent Office

Office européen des brevets

(11) Veröffentlichungsnummer: **0 356 776**
**A2**

(12) **EUROPÄISCHE PATENTANMELDUNG**

(21) Anmeldenummer: **89114734.0**

(51) Int. Cl.5: **G06F 7/50**

(22) Anmeldetag: **09.08.89**

(30) Priorität: **30.08.88 DE 3829413**

(43) Veröffentlichungstag der Anmeldung:
**07.03.90 Patentblatt 90/10**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Fischer, Horst, Dipl.-Phys.**
**Brandstrasse 6 a**
**D-8013 Haar(DE)**
Erfinder: **Rohsaint, Wolfgang, Dipl.-Ing.**
**Annette-Kolb-Anger 13**
**D-8000 München 83(DE)**
Erfinder: **Hmimid, Mohamed, Dr. Ing.**
**Pickelstrasse 6**
**D-8000 München 19(DE)**

(54) **Inkrementer.**

(57) Mit Hilfe des Inkrementers kann eine Eingangsbinärzahl um eine Einheit verändert werden. Dazu besteht der Inkrementer aus einem ersten Schaltkreis CL, der aus den Bitstellen (d) der Eingangsbinärzahl Schaltsignale (p) erzeugt, die für die niederwertigste Stelle (d0) gleich dem Wert dieser Stelle ist, bei höherwertigeren Stellen durch UND-Verknüpfung der niederwertigeren Bitstellen der Eingangsbinärzahl erzeugt wird. Mit Hilfe einer Ausgangsstufe, der die Eingangsbinärzahl (D) und die Schaltsignale (P) zugeführt werden, werden die Bitstellen der Ausgangsbinärzahl (A) erzeugt. Dabei wird die niederwertigste Bitstelle der Ausgangsbinärzahl durch Invertierung der niederwertigsten Bitstelle der Eingangsbinärzahl gewonnen. Die höherwertigeren Bitstellen der Ausgangsbinärzahl werden aus den zugeordneten Binärstellen der Eingangsbinärzahl gewonnen, wobei eine beliebige, eine i-te, Bitstelle der Ausgangsbinärzahl gleich der i-ten Bitstelle der Eingangsbinärzahl ist, wenn das Schaltsignal des ersten Schaltkreises (CL), das aus den Bitstellen 0...i = 1 gewonnen worden ist, binär 1 ist. Sonst wird diese Bitstelle (d (i)) der Eingangsbinärzahl in invertierter Form zum Ausgang durchgeschaltet. Der erste Schaltkreis kann so aufgebaut werden, daß zur Erzeugung der Schaltsignale jeweils Teilschaltungen vorgesehen werden, die eine gleiche Anzahl von

Stufen aufweisen. Es entsteht somit eine regelmäßige Struktur, die leicht erweiterbar ist. Die Ausgangsstufe muß lediglich Multiplexer vorsehen, die in Abhängigkeit der Schaltsignale entweder die Bitstellen der Eingangsmehrzahl direkt oder invertiert durchschalten.

## FIG 1

## Inkrementer

Die Erfindung bezieht sich auf einen Inkrementer zur Veränderung einer n stelligen Eingangsbinärzahl um eine Einheit in eine n stellige Ausgangsbinärzahl.

Es ist bekannt, Inkrementer mit Carry-Look-Ahead Technik aufzubauen. Dies erfolgt mit Hilfe einer Zweistufenlogik (NAND-OR). Diese Technik wird insbesondere eingesetzt für Wortbreiten bis zu 4 Bit. Bei größeren Wortbreiten würden Gatter mit zu vielen Eingängen benötigt. Die Schaltung ist irregulär, da für jedes Bit der Eingangsbinärzahl eine andere Übergangsfunktion implementiert werden muß (IBM Technical Disclosure Bulletin, Juni 1985, Seite ... "MOSFET Look-Ahead Bit Incrementer/Decrementer").

Die der Erfindung zugrundeliegende Aufgabe besteht darin, einen Inkrementer beliebiger Wortbreite anzugeben, der sehr schnell das Ergebnis liefert und dabei sehr regulär aufgebaut ist. Diese Aufgabe wird bei einem Inkrementer der angegebenen Art gemäß den Merkmalen des Patentanspruchs 1 gelöst.

Der Inkrementer besteht aus zwei Schaltkreisen. Ein erster Schaltkreis verknüpft in einer Carry-Look-Ahead Struktur die Bitstellen der Eingangsbinärzahl so miteinander, daß für jede Bitstelle ein Schaltsignal gebildet wird. Dieser erste Schaltkreis weist eine regelmäßige Struktur auf und mit ihm können sehr schnell die Schaltsignale erzeugt werden. Die Struktur des Schaltkreises ist sehr einfach an größere oder kleinere Breiten der Binärzahl anpaßbar. Mit Hilfe einer Ausgangsstufe werden dann die Binärstellen der Ausgangsbinär zahl erzeugt. An die Ausgangsstufe werden die Bitstellen der Eingängsbinärzahl angelegt, weiterhin die Schaltsignale vom ersten Schaltkreis. Die Ausgangsstufe gibt für die niederwertigste Bitstelle der Ausgangsbinärzahl immer die invertierte Bitstelle der Eingangsbinärzahl ab. Für die höherwertigeren Bitstellen der Ausgangsbinärzahl gibt die Ausgangsstufe die zugeordnete Bitstelle der Eingangsbinärzahl in invertierter Form weiter, wenn das Schaltsignal binär 1 ist, sonst die Bitstelle in nicht invertierter Form.

Diese Realisierung ermöglicht es, daß der erste Schaltkreis Teilschaltungen für jede Bitstelle vorsehen kann. Die Erweiterung des Inkrementers erfordert dann lediglich, daß weitere Teilschaltungen benachbart zu den bisherigen Teilschaltungen angeordnet werden.

Weiterbildungen der Erfindung ergeben sich aus den Unteransprüchen.

Anhand von Ausführungsbeispielen, die in den Figuren dargestellt sind, wird die Erfindung weiter erläutert. Es zeigen

FIG 1 ein Blockschaltbild des Inkrementers,

FIG 2 ein Blockschaltbild einer ersten Ausführungsform des ersten Schaltkreises,

FIG 3 ein Blockschaltbild einer erweiterten Ausführungsform des ersten Schaltkreises,

FIG 4 die Realisierung des Blockschaltbildes der FIG 2,

FIG 5 und FIG 6 Schaltkreise, die bei der Realisierung der FIG 4 verwendet werden,

FIG 7 eine zweite Ausführungsform des Blockschaltbildes der FIG 2,

FIG 8 bis FIG 10 Schaltungen, die bei der FIG 7 verwendet werden,

FIG 11 eine erste Ausführungsform der Ausgangsstufe,

FIG 12 eine zweite Ausführungsform der Eingangsstufe,

FIG 13 einen Schaltkreis, der in den Ausgangsstufen verwendet wird,

FIG 14 die Zuordnung von Eingangssignalen und Ausgangssignalen zu einer Verknüpfungsschaltung, die in FIG 7 verwendet wird.

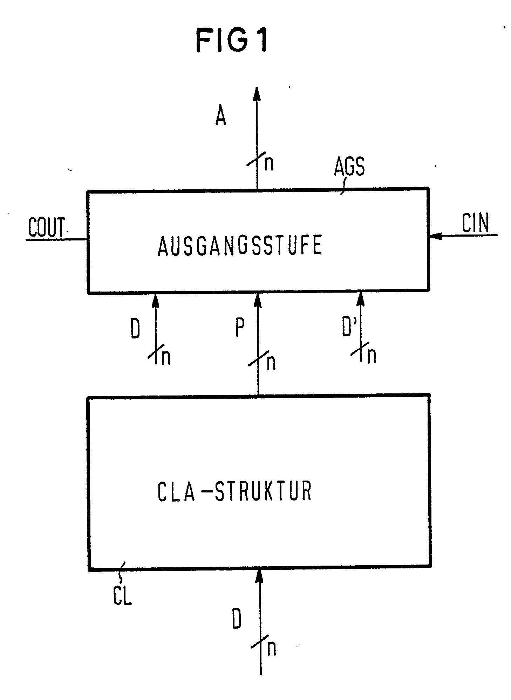

Der Inkrementer wird unterteilt in einen ersten Schaltkreis CL mit Carry-Look-Ahead-Struktur und eine Ausgangsstufe AGS (s. FIG 1). Dem Schaltkreis CL wird die Eingangsbinärzahl D, die n-bit breit ist, zugeführt. Der Schaltkreis CL erzeugt dann Schaltsignale P, die dazu verwendet werden, die Binärstellen der Eingangsbinärzahl D über die Ausgangsstufe AGS direkt oder invertiert zum Ausgang als Ausgangsbinärzahl A durchzuschalten. Mit Hilfe des Signales CIN wird festgelegt, ob die Eingangsbinärzahl inkrementiert wird oder nicht inkrementiert wird. Mit Hilfe des Signals COUT kann festgestellt werden, ob die höchste Binärstelle verändert worden ist, wenn sie vorher = 1 war.

Der Inkrementer arbeitet so, daß die Eingangsbinärzahl D jeweils um eine Einheit erhöht wird. Es gilt also

$A = D + 1$,

für den Fall, daß $CN = 1$ und

$A = D$, für den Fall, daß $CIN = 0$ ist.

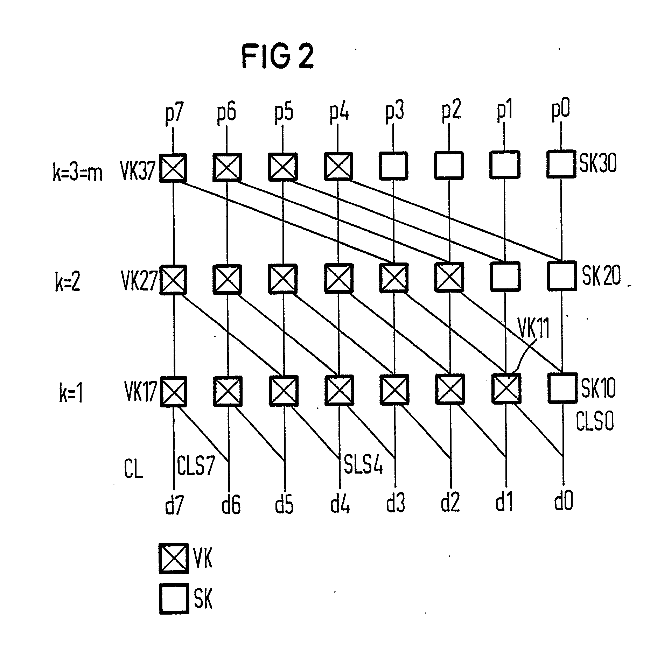

Ein Blockschaltbild des ersten Schaltkreises CL zeigt FIG 2. Hier ist die regelmäßige Struktur dieses Schaltkreises erkennbar. Der Schaltkreis CL besteht aus Teilschaltungen CLS, im Ausführungsbeispiel bei einer Wortbreite von $n = 8$ Bit aus acht Teilschaltungen CLS0 bis CLS7. Jede Teilschaltung CLS erzeugt für eine Bitstelle d der Eingangsbinärzahl D ein Schaltsignal p. Dazu sind in den Teilschaltungen CLS Schiebeschaltungen SK oder Verknüpfungsschaltungen VK vorgesehen.

Die Verknüpfung der Bitstellen der Eingangsbinärzahl D zur Erzeugung der Schaltsignale p erfolgt auf folgende Weise:

Die niederwertigste Bitstelle d0 wird unverändert als Schaltsignal p0 verwendet. Aus Regelmäßigkeitsgründen sieht die dafür verwendete Teilschaltung CLS0 Schiebeschaltungen SK vor, die in der Anzahl der Anzahl von Verknüpfungsknoten VK entspricht, die für die Teilschaltung CL für die höchstwertigste Bitstelle der Eingangsbinärzahl vorgesehen werden muß.

Das Schaltsignal p1 wird aus der Bitstelle d1 und der Bitstelle d0 der Eingangsbinärzahl entwickelt. Dazu wird eine Verknüpfungsschaltung VK11 verwendet, die ein Schaltsignal p1 = 1 abgibt, wenn die Bitstellen d0 und d1 binär 1 sind d7. Das Schaltsignal p7 für die höchstwertigste Bitstelle der Eingangsbinärzahl d7 ist dann binär 1, wenn die niederwertigeren Bitstellen der Eingangsbinärzahl d0 bis d6 alle binär 1 sind. Entsprechendes gilt für die Schaltsignale p1 bis p6.

Um eine regelmäßige Struktur zu erhalten, und somit immer gleichartig aufgebaute Verknüpfungsschaltungen VK, wird die Verknüpfung der einzelnen Bitstellen der Eingangsbinärzahl bei höherwertigeren Bitstellen auf eine Mehrzahl von Verknüpfungsschaltungen VK verteilt, die entsprechend FIG 2 mit den Ausgängen der Verknüpfungsschaltungen, die in Teilschaltungen CLS für niederwertigere Bitstellen angeordnet sind, verbunden sind. Damit entstehen Teilschaltungen, die mehrere Stufen m enthalten (m = aufgerundet $\log_2 n$).

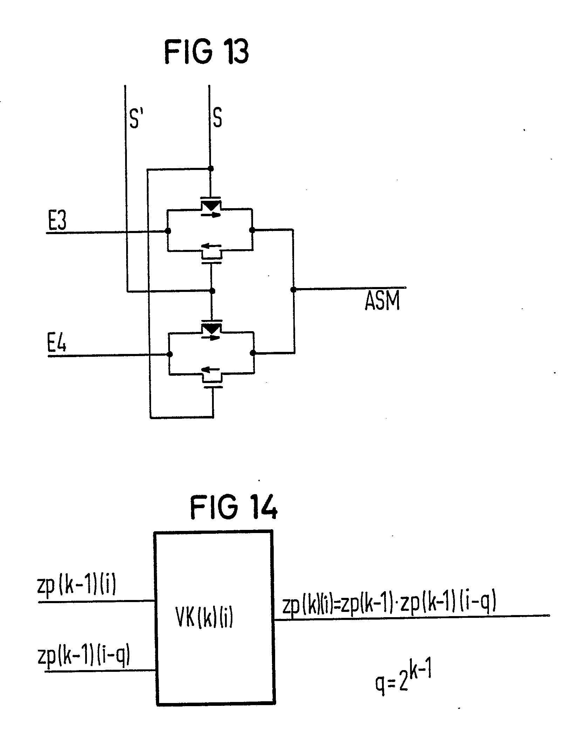

Die Verknüpfungsschaltungen VK der ersten Stufe k = 1 verknüpfen immer die zugeordnete Bitstelle d(i) und die nächst niederwertigere Bitstelle d(i-1). Die Verknüpfungsschaltungen VK höherer Stufen verknüpfen Signale, wie es in FIG 14 dargestellt ist. Hier ist eine Verknüpfungsschaltung VK der k-ten Stufe gezeigt, wobei k = 2 ... kmax, kmax = aufgerundet $\log_2 i$ ist. Die Eingangssignale der Verknüpfungsschaltungen VK sind mit zp bezeichnet, ebenso die Ausgangssignale. Einer Verknüpfungsschaltung VK wird dann ein Ausgangssignal zp (k-1)(i) von einer vorhergehenden Verknüpfungsschaltung derselben Teilschaltung CLS(i) und ein Ausgangssignal einer vorhergehenden Verknüpfungsstufe VK der Teilschaltung CLS(i-q), nämlich zp (k-1) (i-q), q = $2^{k-1}$ zugeführt. Als Ausgangssignal gibt diese Verknüpfungsstufe VK das Signal zp(ki) = zp(k-1)(i) * zp(k-1) (i-q) ab. Dieses Ausgangssignal ist das Schaltsignal p(i), wenn die Verknüpfungsschaltung VK die Verknüpfungsschaltung der höchsten Stufe in dieser Teilschaltung CLS ist.

Die Anzahl der Verknüpfungsschaltungen VK innerhalb einer Teilschaltung CLS hängt von der zu verarbeitenden Bitstelle d ab. Die maximale Anzahl der Verknüpfungsschaltungen in der höchstwertigsten Teilschaltung CLS, z.B. der Teilschaltung CLS7 der FIG 2, ist aufgerundet $\log_2 8$ und beträgt somit 3. Bei den übrigen Teilschaltungen CLS, bei denen weniger Verknüpfungsschaltungen zur Erzeugung des Schaltsignales p erforderlich sind, werden anstatt der Verknüpfungsschaltungen Schiebeschaltungen SK vorgesehen, um neben einer regelmäßigen Struktur des Schaltkreises CL, die für den Betrieb der Verknüpfungsschaltungen VK richtigen Laufzeiten und Treiberleistungen zu erhalten.

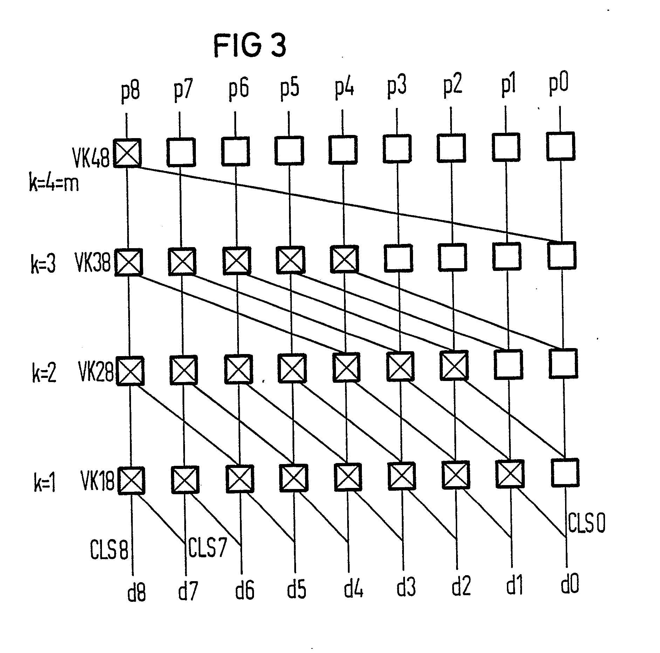

Wenn die Wortbreite der Eingangbinärzahl z.B. um 1 Bit erhöht wird, dann muß der Schaltkreis CL lediglich um eine Teilschaltung CLS erweitert werden, die benachbart der bisherigen Teilschaltung für die höchstwertigste Bitstelle der Eingangsbinärzahl angeordnet wird. Eine solche Anordnung zeigt FIG 3. Neben die Teilschaltung CLS7 für die Bitstelle d7 der Eingangsbinärzahl wird nun eine weitere Teilschaltung CLS8 für die neue Bitstelle d8 angeordnet. Diese Teilschaltung CLS8 weist nun vier Verknüpfungsschaltungen auf, da aufgerundet $\log_2 9$ = 4 ist. Die Verbindungen der Eingänge der Verknüpfungsschaltungen der Teilschaltung CLS8 kann FIG 3 entnommen werden und ist entsprechend der Erläuterung zur FIG 2 durchzuführen. Bei den übrigen Teilschaltungen CLS0 bis CLS7 werden nun Schiebeschaltungen SK am Ausgang vorgesehen, entsprechend der Verknüpfungsschaltung VK48 bei der Teilschaltung CLS8.

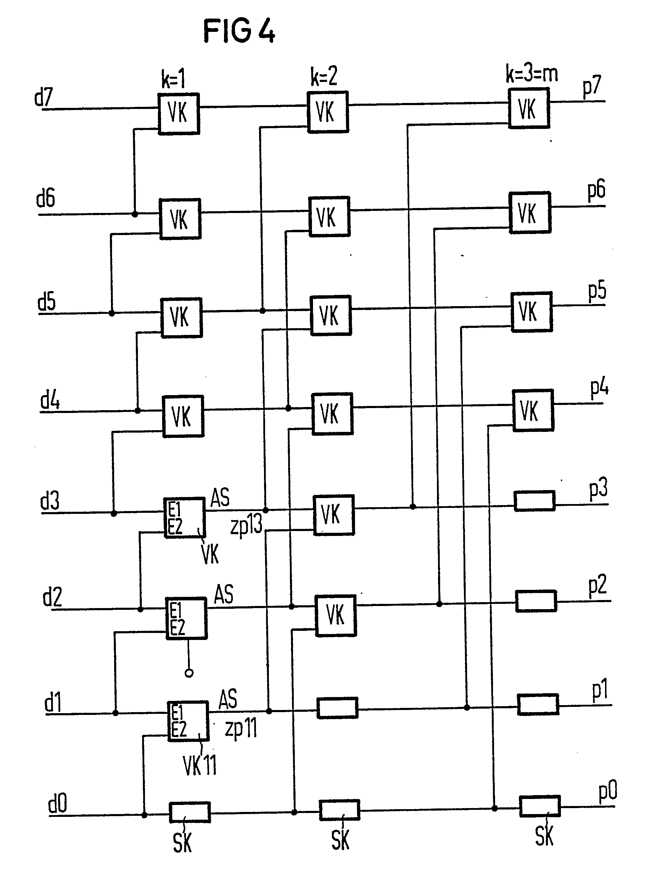

Die Realisierung des Schaltkreises nach FIG 2 kann FIG 4 entnommen werden. Die Verknüpfungsschaltungen VK weisen zwei Eingänge E1 und E2 auf und einen Ausgang AS. Die Verknüpfungsschaltung VK bildet aus den Signalen an den Eingängen E1 und E2 ein Ausgangssignal zp am Ausgang AS durch UND-Verknüpfung dieser Signale. Zum Beispiel gilt für die Verknüpfungsschaltung Vk11 zp11 = d1 * d2. Entsprechend kann für die übrigen Verknüpfungsschaltungen jeweils das Ausgangssignal zp errechnet werden.

Die Verknüpfungsschaltungen VK bestehen somit entsprechend FIG 6 aus UND-Schaltungen, aus einer NAND-Schaltung ND und aus einem Inverter IN1. Es ist als Beispiel die Verknüpfungsschaltung für die Stufe 2 gezeigt.

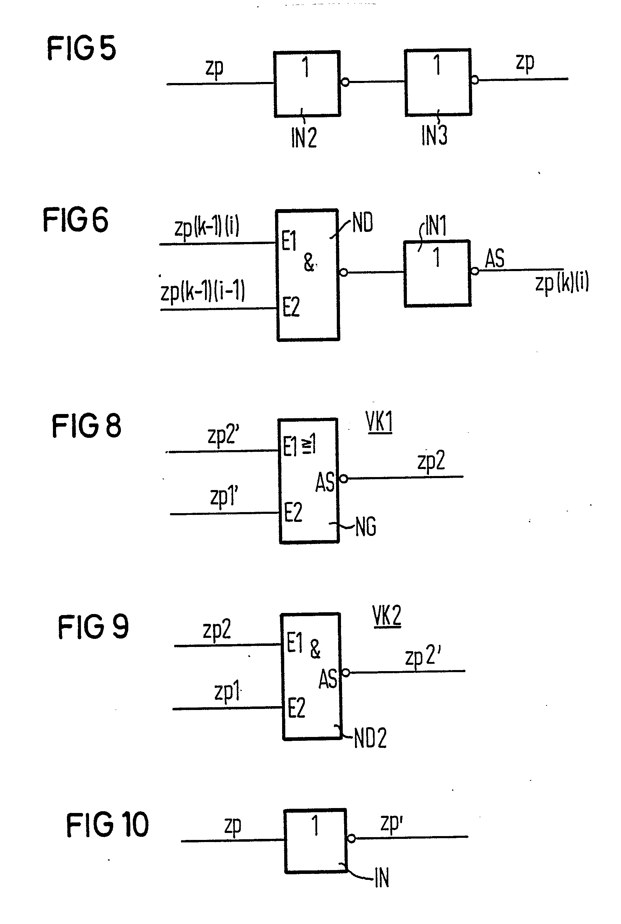

Für die Schiebeschaltungen SK werden entsprechend FIG 5 Inverterschaltungen IN2 und IN3 verwendet. Die Verbindungen der einzelnen Verknüpfungsschaltungen VK und Schiebeschaltungen SK können FIG 2 entnommen werden.

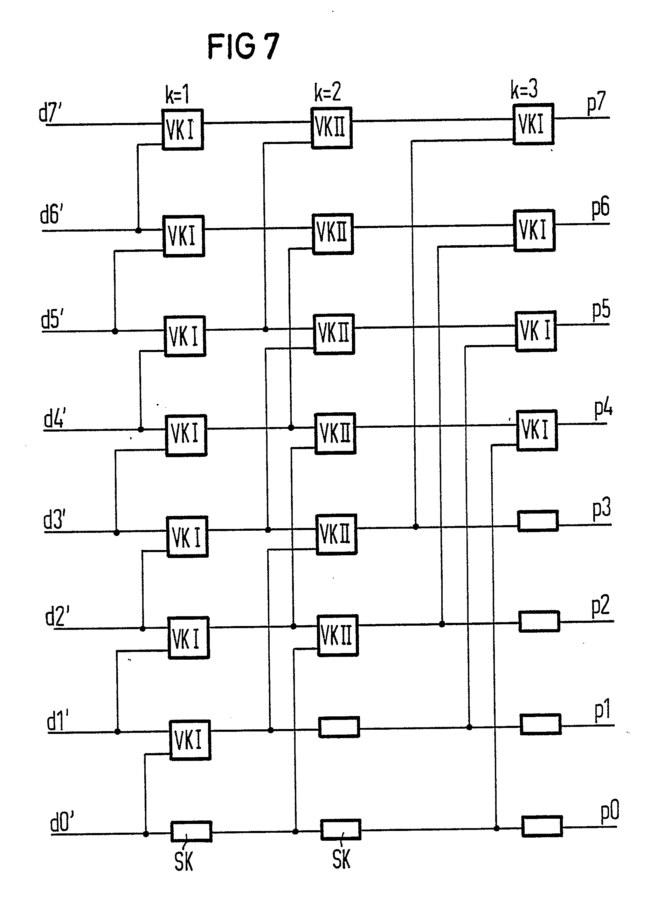

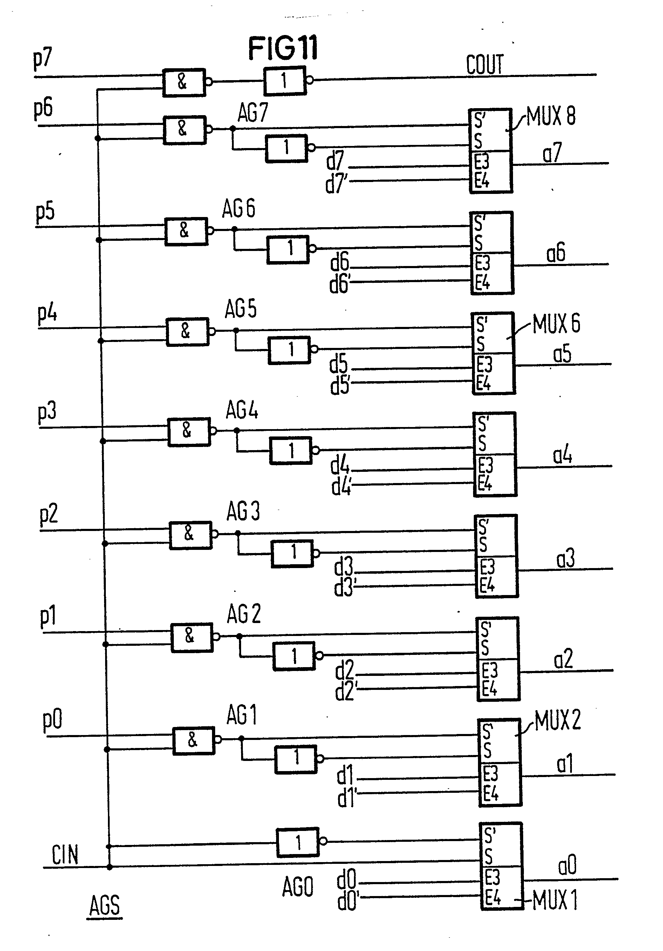

Eine zweite, für MOS Anwendungen vorteilhafte Realisierungsmöglichkeit der FIG 2 zeigt FIG 7. Der Unterschied zur FIG 4 besteht darin, daß von Stufe zu Stufe die negierten Signale weitergegeben werden. Damit wird pro Stufe ein Inverter eingespart. Eingangssignale sind hier die negierten Bitstellen der Eingangsbinärzahl, also d(i)'. Allerdings werden zwei verschiedene Verknüpfungsschaltungen benötigt, nämlich VKI und VKII mit VKII = VKI' invertiert. Diese werden von Stufe zu Stufe abwechselnd verwendet. Nach FIG 8 besteht die Verknüpfungsschaltung VKI nur noch aus einem NOR-Gatter NG1, die Verknüpfungsschaltung VKII aus einem NAND-Gatter ND2. Die Schiebeschaltung ist entsprechend FIG 10 ausgeführt. Sie besteht lediglich aus einem Inverter IN.

Eine Ausführungsform der Ausgangsstufe AGS kann FIG 11 entnommen werden. Diese sieht für jede Bitstelle der Ausgangsbinärzahl eine Ausgangsschaltung AG0-AG(n-1) mit jeweils einem Multiplexer MUX vor, an dessen schaltbaren Eingängen E3 und E4 die zugeordnete Binärstelle der Eingangsbinärzahl nicht invertiert und invertiert zugeführt werden. Mit Hilfe von Steuersignalen, die an die Steuereingänge S und S' der Multiplexer MUX angelegt werden, wird entweder d oder d' zum Ausgang a durchgeschaltet.

Das Steuersignal für den Multiplexer MUX1 für die niederwertigste Bitstelle der Ausgangsbinärzahl wird aus dem Umschaltesignal CIN gewonnen, das so an die Steuereingänge des Multiplexers MUX1 angelegt wird, daß die am Multiplexer MUX1 anliegende Bitstelle d0 der Eingangsbinärzahl immer in invertierter Form als Bitstelle a0 durchgeschaltet wird. Dementsprechend wird das Umschaltesignal CIN über einen Inverter IV zum Steuereingang S' und nicht invertiert zum Steuereinganng S des Multiplexers MUX1 geführt.

Die zweite Bitstelle a1 der Ausgangsbinärzahl wird mit Hilfe des Schaltsignales p0 gewonnen. Bei Vorliegen des Umschaltesignales CIN und des Schaltsignales p0 wird d1' als Ausgangswert a1 über den Multiplexer MUX2 durchgeschaltet, wenn das Schaltsignal p0 binär 1 ist; sonst d1. Entsprechendes gilt für die den anderen Bitstellen der Ausgangsbinärzahl zugeordneten Multiplexer MUX. Das bedeutet, daß eine Bitstelle d(i), bei i größer 0, nur dann invertiert als Bitstelle a(i) der Ausgangsbinärzahl A durchgeschaltet wird, wenn $p(i) = 1$. $p(i)$ ist aber nur dann binär 1, wenn die Bitstellen d0 bis d(i) der Eingangsbinärzahl alle binär 1 sind. Dies gilt im Ausführungsbeispiel unter der Voraussetzung, daß CIN = 1 ist.

Mit Hilfe der Ausgangsstufe kann noch ein Umschaltesignal COUT für eine nächste Stufe gewonnen werden. Dazu kann dann das Schaltsignal p7 und das Umschaltesignal CIN herangezogen werden.

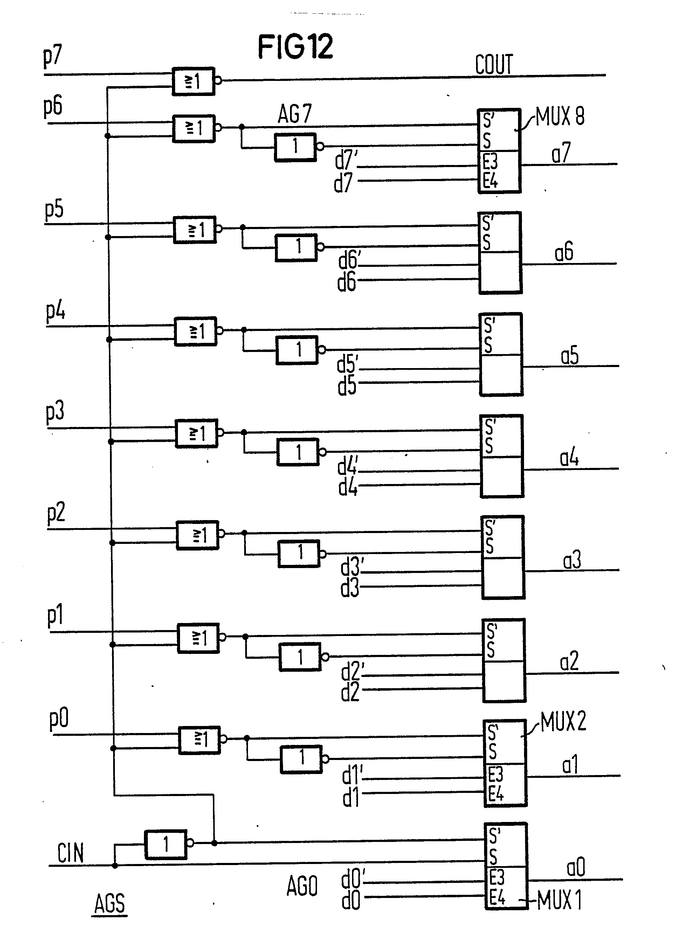

Die Ausgangsstufe nach FIG 11 ist für einen ersten Schaltkreis nach FIG 4 geeignet, aber auch für einen Schaltkreis nach FIG 7 mit einer ungeraden Anzahl von Stufen. Eine weitere Ausführungsform der Ausgangsstufe zeigt FIG 12, der für einen ersten Schaltkreis nach FIG 7 mit gerade Anzahl von Stufen geeignet. Aus FIG 12 kann leicht entnommen werden, daß diese Ausgangsstufe ebenfalls nach dem angegebenen Prinzip aus den Bitstellen d der Eingangsbinärzahl unter Verwendung der Schaltsignale p die Bitstellen a der Ausgangsbinärzahl erzeugt.

Die Multiplexer, die in FIG 11 und FIG 12 verwendet werden, können in CMOS Technik entsprechend FIG 13 aufgebaut sein. In Abhängigkeit des Steuersignals s, wird entweder das Eingangssignal am Eingang E3 oder das Eingangssignal am Eingang E4 zum Ausgang ASM durchgeschaltet. Die Funktion kann der FIG 13 leicht entnommen werden.

## Ansprüche

1. Inkrementer zur Veränderung einer n stelligen Eingangsbinärzahl (D) um eine Einheit in eine n stellige Ausgangsbinärzahl (A) bestehend aus
- einem ersten Schaltkreis (CL), dem die Binärstellen (d) der Eingangsbinärzahl (D) zugeführt werden, der n Ausgänge aufweist und an jedem i-ten Ausgang (i = 0,1 ... n-1) ein Schaltsignal (p(i)) abgibt, wenn r Stellen der Binärzahl (r = 0, 1... i) den einen binären Wert einnehmen,
- einer Ausgangsstufe (AGS) mit n Eingängen für die n Stellen der Eingangsbinärzahl und zugeordnete n Ausgänge für die n Stellen der Ausgangsbinärzahl (A), die am Ausgang für die Binärstelle für i = 0 den anliegenden Wert dieser Binärstelle (d0) der Eingangsbinärzahl invertiert abgibt, an den übrigen Ausgängen (i = 1 ... n-1) jeweils die zugeordneten Werte der Binärstellen (d(i) zum Ausgang durchschaltet, wenn für eine i-te Binärstelle (d (i)) ein i-1 Schaltsignal (p(i-1)) vom ersten Schaltkreis (CL) vorliegt.

2. Inkrementer nach Anspruch 1, **gekennzeichnet** durch einen ersten Schaltkreis (CL) aus n Teilschaltungen (CLS), jeweils eine pro Binärstelle (d) der Eingangsbinärzahl (D), von denen jede i-te Teilschaltung (CL(i)) nur dann ein Schaltsignal (p(i)) abgibt, wenn alle r-Stellen (r = 0, 1... i) der Eingangsbinärzahl den einen binären Wert ("1") einnehmen.

3. Inkrementer nach Anspruch 2, **gekennzeichnet** durch die Ausgangsstufe (AGS) mit n Ausgangsschaltungen (AG0 - AG(n-1)), je eine pro Binärstelle der Eingangs- und Ausgangsbinärzahl, bei der die Ausgangsschaltung (AG0) für die Binärstelle i = 0 die anliegende Binärstelle (d0) der Eingangsbinärzahl invertiert zum Aus gang durchschaltet, und bei der jede der Ausgangsschaltungen für die übrigen Binärstellen (i = 1 ... n-1) die zugeordnete i-te Binärstelle der Eingangsbinärzahl zum Ausgang durchschaltet, wenn das i-1-te Schaltsignal vorliegt, sonst die i-te Binärstelle (d(i)) der Eingangsbinärzahl in invertierter Form.

4. Inkrementer nach Anspruch 2 oder 3, dadurch **gekennzeichnet,** daß jede Teilschaltung (CLS) für i > 0 aus aufgerundet $\log_2 i$ hintereinander

liegenden Verknüpfungsschaltugnen (VK) besteht, von denen die erste Verknüpfungsschaltung (VK1-(i)) aus den Binärstellen für i (d (i)) und i-1 (d (i-1)) durch UND-Verknüpfung ein Ausgangssignal zp1(i) erzeugt, von denen jede k-te Verknüpfungsschaltung (k = 2 ... aufgerundet $\log_2 i$) aus dem Zwischensignal (zp(k-1)i) der k-1-ten Stufe dieser Teilschaltung (CLS(i)) sowie den Zwischensignalen (zp-(k-1), (i-q);q = $2^{k-1}$) der k-1-ten Stufe der i-9-ten Teilschaltung (CLS(i-q) ein Zwischensignal (zp(ki)) durch UND-Verknüpfung erzeugt.

5. Inkrementer nach Anspruch 4, dadurch **gekennzeichnet,** daß die Teilschaltung (CLS0) für i = 0 aus einer Schiebeschaltung (SK) besteht, die die zugeordnete Binärstelle (d0) der Eingangsbinärzahl (D) als Schaltsignal (p0) zum Ausgang überträgt.

6.Inkrementer nach Anspruch 4 oder 5, dadurch **gekennzeichnet,** daß pro Teilschaltung (CLS) eine gleiche Anzahl von m = aufgerundet $\log_2 n$ Stufen vorgesehen ist, wobei bei Teilschaltungen mit weniger als m Verknüpfungsschaltungen (VK) anstatt einer Verknüpfungsschaltung eine Schiebeschaltung (SK) angeordnet ist.

7. Inkrementer nach Anspruch 6, dadurch **gekennzeichnet,** daß die Teilschaltungen (CLS) für ansteigendes i nebeneinander angeordnet sind.

8. Inkrementer nach Anspruch 7, dadurch **gekennzeichnet,** daß bei Erweiterung der Wortbreite der Eingangsbinärzahl (D) um 1 Bit eine weitere Teilschaltung neben der (n-1)ten Teilschaltung (CLS (n-1)) angeordnet ist, die aus aufgerundet $\log_2(n + 1)$ Verknüpfungsschaltungen besteht.

9. Inkrementer nach Anspruch 8, dadurch **gekennzeichnet,** daß bei den übrigen (n-1) Teilschaltungen (CLS) am Ende eine Schiebeschaltung angeschlossen ist.

# FIG 1

## FIG 2

EP 0 356 776 A2

# FIG 3

# FIG 4

FIG 5

FIG 6

FIG 8

FIG 9

FIG 10

# FIG 7

# FIG 11

FIG12

EP 0 356 776 A2

## FIG 13

S'    S

E3

ASM

E4

## FIG 14

zp(k-1)(i)

VK(k)(i)    zp(k)(i)=zp(k-1)·zp(k-1)(i-q)

zp(k-1)(i-q)

$q = 2^{k-1}$